# EUROPEAN PATENT SPECIFICATION

(11) **EP 3 878 082 B1**
(45) Date of publication and mention of the grant of the patent: **28.02.2024**
(21) Application number: 19832183.8
(22) Date of filing: 08.11.2019
(51) Int. Cl.: H02K 15/04, H02K 15/10, H02K 15/00

(54) **APPARATUS AND METHOD FOR TWISTING CONDUCTIVE WIRES TO BE APPLIED IN AN ELECTRIC MACHINE**
VORRICHTUNG UND VERFAHREN ZUM VERDREHEN VON IN EINER ELEKTRISCHEN MASCHINE AUFZUBRINGENDEN LEITFÄHIGEN DRÄHTEN
APPAREIL ET PROCÉDÉ DE TORSION DE FILS CONDUCTEURS À APPLIQUER DANS UNE MACHINE ÉLECTRIQUE

(30) Priority: 09.11.2018 IT 201800010213
(43) Date of publication of application: 15.09.2021
(73) Proprietor: Grob Italy S.r.l., 10093 Collegno (TO) (IT)
(72) Inventor: MARZOLLA, Mauro, 10093 Collegno (Torino) (IT)
(74) Representative: Savoca, Agatino
(86) International application number: PCT/IB2019/059616
(87) International publication number: WO 2020/095264

(56) References cited:
- EP-A1- 1 376 828
- WO-A2-2012/156066
- JP-A- H11 122 854
- US-A- 4 741 093
- US-A- 5 210 928

## Description

### Technical field

The present invention is, in general, in the field of electric machinery; in particular, the invention refers to a process for the twisting of conducting wires to be applied in an electric machine.

### Summary of the invention

Apparatuses used to apply electric windings to the slots of metal parts of electric machines, such as stators and rotors, are known.

The conductors are inserted into the slots of the electric machine after winding around two parallel vertical brackets. However, in such a configuration these windings are difficult to handle, especially as they have frayed ends and are difficult to collect and insert into insulating sheaths.

An apparatus for inserting and twisting conductors into the slots of an electric machine is known from document EP 1 376 828 A1.

However, the conductors described in the document are strips or pads. Therefore, they are not wires (which, in the application described in the present document, are clearly to be understood as traditional, circular-section, filiform, flexible elements, which, intertwined with each other, are inserted into tubular insulating sheaths).

Moreover, the aforementioned prior art document describes a process for inserting these strips in the slots of the stator, where the problem underlying the present invention is above all that of facilitating the insertion of bundles of wires into insulating sheaths.

To achieve this result, a twisting device according to the present invention comprises a rotating fork with which it is possible to grasp a taut bundle of conducting wires and, by rotating the fork, apply a twist to these wires, so as to collect them and compact them expediently before shearing. In this way, it becomes easier to manipulate the ends of the cables for subsequent operations, as it is not necessary for an operator to collect and twist the individual bundles of wires, once these spread out and disperse, following insertion in the stator slots and shearing.

In the aforementioned prior art document, however, the conductors are already sheared and sheathed, and a person skilled in the art would not twist them to allow their insertion into the insulating sheaths. In effect, the only way to insert the strips in the machine is that they are already sheared and preformed, and thus, when they are inserted, they are already sheathed in their respective insulators. It is also clear that the twisting of the strips, before the insertion thereof in the insulators, would not allow the latter to be fitted on the former. Therefore, a process according to the present invention allow the conductor wires to be handled more easily, once these have already been inserted in the slots of the electric machine, in view for example of inserting the same in the corresponding insulating sheaths. Furthermore, a method of connecting an end portion of an enameled wire forming a winding of an electric motor to one end of a conductor of a lead, is known from US5210928A. Also a stator winding termination arrangement in an electric motor where the is twisted is known from JPH11122854A.

The aforesaid and other objects and advantages are achieved, according to an aspect of the invention, by a device, an apparatus and a process having the features defined in the accompanying claims.

### Brief description of the drawings

The functional and structural characteristics of some preferred embodiments of a process according to the invention will now be described. Reference is made to the accompanying drawings, wherein:

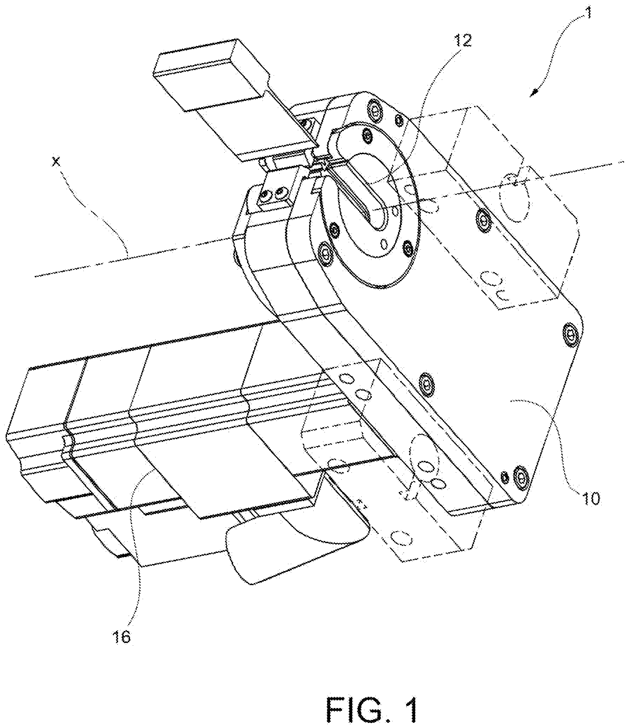

- Figure 1 is a schematic perspective view of a device comprising a fork to twist the cables of the windings of an electric machine, according to an embodiment of the present invention;
- Figure 2 is a schematic sectional view of the device in Figure 1, wherein the gears of a transmission of the rotational motion of the fork are visible, according to an embodiment of the invention;
- Figure 3 is a schematic perspective view of an apparatus comprising the device of Figures 1 and 2, at a step in the twisting process wherein the device is retracted to a distal position with respect to a taut bundle of cables taken from the windings about to be placed in the part of the electric machine;
- Figure 4 is a schematic perspective view of the apparatus in Figure 3 at a step in the twisting process wherein the device is moved to a proximal position with respect to the taut bundle of cables; and
- Figure 5 is a schematic perspective view of the apparatus in Figure 3 in a step of the twisting process wherein the device engages the taut bundle of cables.

### Detailed description

Before explaining in detail a plurality of embodiments of the invention, it should be clarified that the invention is not limited in its application to the constructive details and to the configuration of the components presented in the following description or illustrated in the drawings. The invention may assume other embodiments and may in practice be implemented or achieved in different ways. It should also be understood that the phraseology and terminology have descriptive purposes and should not be construed as restrictive.

Making reference to the figures, by way of example, an apparatus 20 for the twisting of conducting wires to be applied in an electric machine comprises a device 1 for the twisting of conducting wires 9 to be applied in an electric machine 8 comprises an outer casing 10 and a fork 12, supported rotatably by the outer casing 10.

The fork 12 comprises a pair of prongs 12a elongated in a direction perpendicular to the rotation axis of the fork 12, between which prongs 12a a plurality of conducting wires 9 are insertable along a direction parallel to the rotation axis of the fork 12, such that the rotation of the fork 12 causes a twisting of the conducting wire. In other words, between the prongs 12a there is a slot wherein it is possible to insert a plurality of conducting wires, so that the rotation of the prongs 12 causes a twisting of these wires.

The gap between the prongs 12a is narrow enough for the fork 12 to grip the wires. Expediently, the prongs 12a are elastically spreadable, so that the forced insertion of the conducting wires widens the gap between these prongs 12a, which in turn will exert a gripping reaction on the wires.

The device 1 further comprises a transmission mechanism 14, housed in the outer casing and adapted to rotate the fork 12.

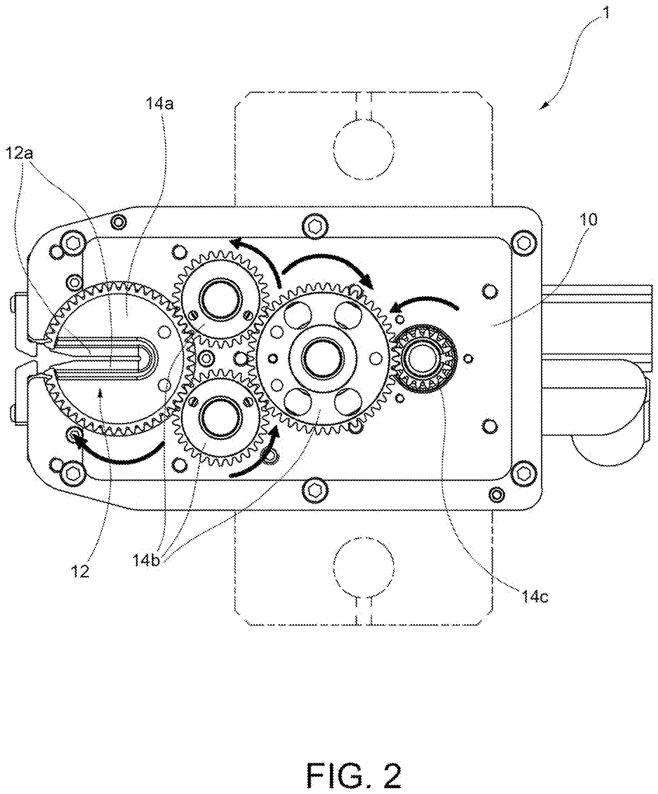

According to a preferred embodiment (illustrated by way of example in Figure 2), the fork 12 may be rotated together with a first gear 14a which engages a plurality of intermediate gears 14b, which receive the rotational motion from a pinion 14c.

Appropriately, the pinion 14c is driven in rotation by a motor 16, integral to the outer casing 10.

According to a preferred embodiment, the prongs 12a of the fork 12 each have a beveled end, so as to create a guide that facilitates the insertion of the wire between these prongs 12a.

The apparatus 20 further comprises a supporting structure 22, fixed with respect to a reference plane (for example, the plane of the floor), and a slide 24, movable with respect to the supporting structure 22 integral with the device 1 along a direction perpendicular to the rotation axis of the fork 12, so that the device 1 may be moved perpendicularly with respect to the wire to be twisted.

Expediently, the slide 24 is movable along the three spatial directions.

A process for twisting conducting wires to be applied in an electric machine comprises the steps of providing an apparatus 20 according to one of the embodiments described above, and providing a part of an electric machine 8 (rotor or stator) and the relative windings 9. The windings 9 are arranged in such a way as to protrude from the slots of the part of the electric machine 8, i.e., they are not yet definitively in place.

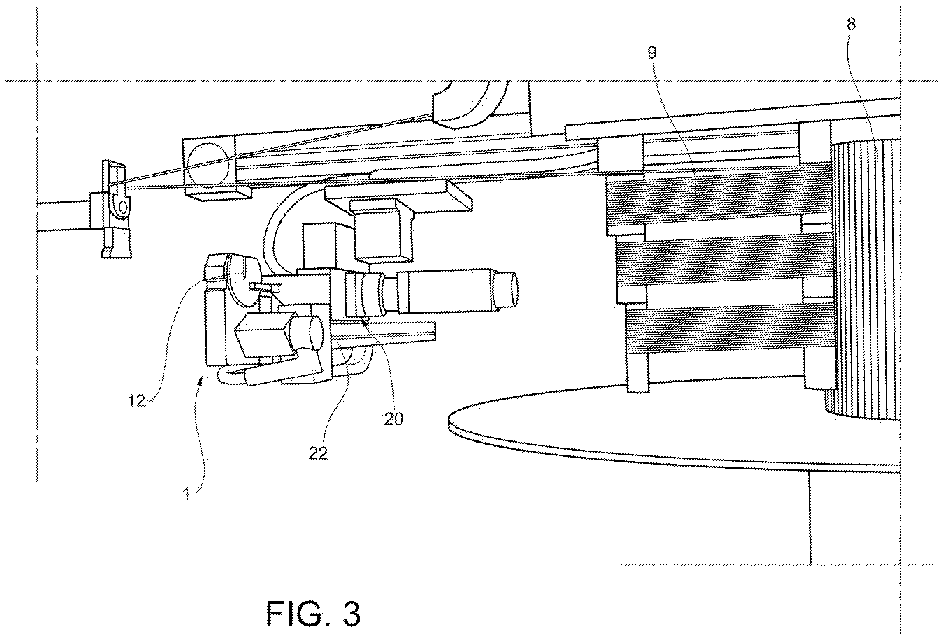

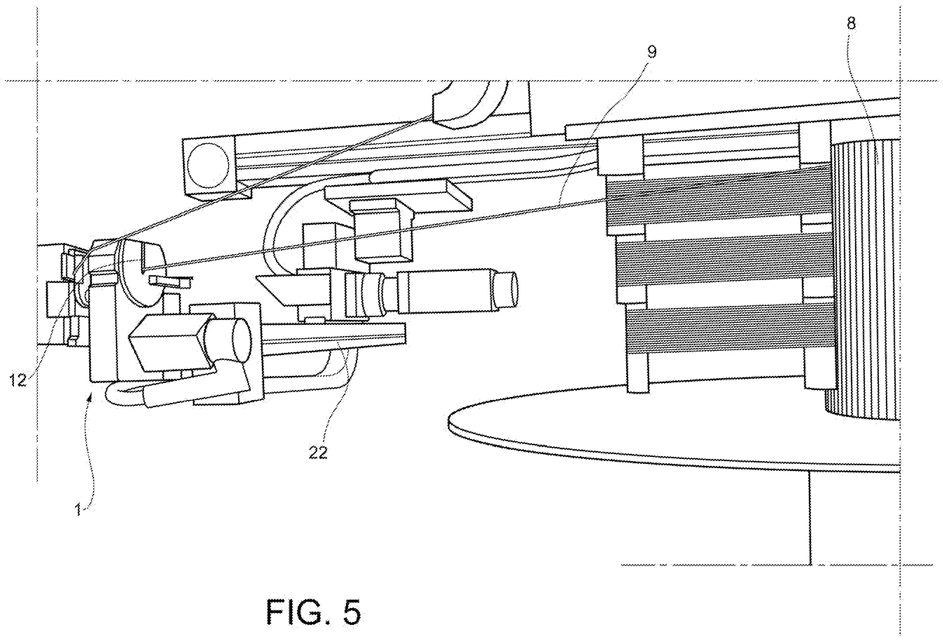

Subsequently, the plurality of conducting wires forming these windings 9 are stretched in a first direction (for example, they may be hooked and pulled in this first direction, as shown by way of example in Figures 3 to 5).

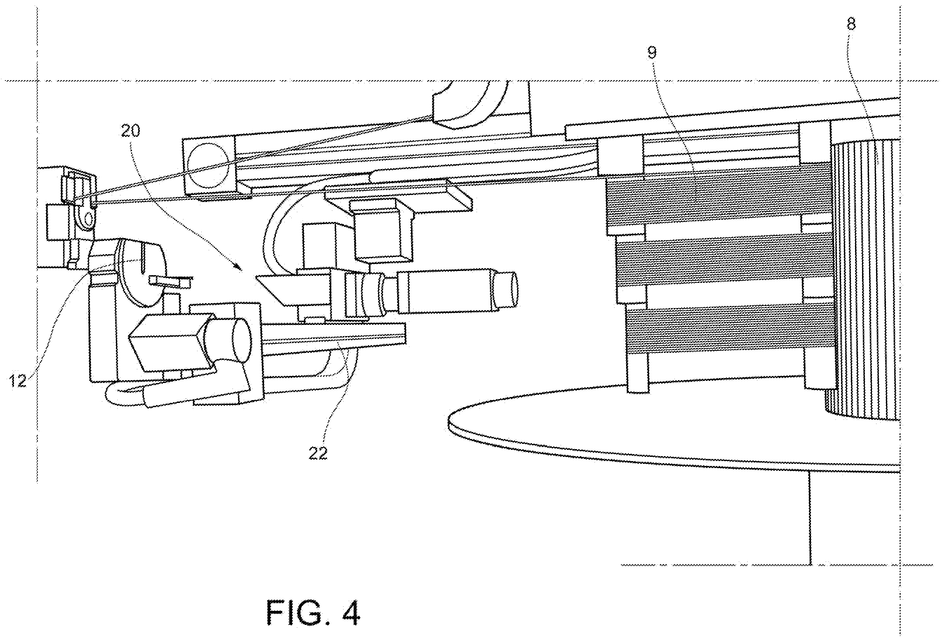

Then, the device 1 is moved in such a way that it is arranged transversely relative to this first direction (as shown by way of example in Figure 4), and the plurality of conducting wires are inserted into the fork 12 of the device 1, which is rotated one or more times around an axis x parallel to this first direction, so as to twist the plurality of conducting wires on themselves.

The twisting step is followed by the step of cutting the plurality of conducting wires. Due to the special configuration of the apparatus 20, it is possible to carry out the twisting step before the cutting step. Downstream of said cutting step, the plurality of conducting wires is inserted into isolating sheaths.

Various aspects and embodiments of a device, an apparatus and a process according to the invention have been described. It is understood that each embodiment may be combined with any other embodiment. The invention, moreover, is not limited to the described embodiments, but may be varied within the scope defined by the accompanying claims.

## Claims

1. A process for twisting conducting wires to be applied in an electric machine, comprising the steps of:
a) providing an apparatus (20) comprising:
- a device (1), which includes:
- an outer casing (10);
- a fork (12), rotatably supported by the outer casing (10) and comprising a pair of prongs (12a) elongated in a direction perpendicular to the rotation axis of the fork (12), between which prongs (12a) one or more conducting wires are insertable along a direction parallel to the rotation axis of the fork (12), such that the rotation of said fork (12) causes a twisting of the conducting wire; and
- a transmission mechanism (14), housed in the outer casing and adapted to rotate the fork (12);
- a supporting structure (22), fixed relative to a reference plane; and
- a slide (24), movable with respect to the supporting structure (22) integrally with the device (1) along a direction perpendicular to the rotation axis of the fork (12), such that said device (1) is movable perpendicular with respect to the wire to be twisted;
b) providing a part of an electric machine (8) and relative windings (9), so that said windings (9) protrude from the slots of the electric machine part (8) and are not permanently in place yet;
c) stretching a plurality of conducting wires forming said windings (9) towards a first direction;
d) moving the device (1) in such a way that it is arranged transversely with respect to said first direction;
e) inserting the plurality of conducting wires into the fork (12) of the device (1);
f) rotating the fork (12) one or more times about an axis parallel to said first direction, so as to twist the one or more conducting wires on themselves;
g) cutting the plurality of conducting wires; and
h) inserting the plurality of conducting wires in isolating sheaths.

2. A process according to claim 1, wherein step b) is preceded by the step of inserting the conductors in the slots of the electric machine after winding around two parallel vertical brackets.

3. A process according to claim 1 or 2, wherein the slide (24) is movable along three spatial dimensions.

4. A process according to any of the preceding claims, wherein the fork (12) is rotatable integrally with a first gear (14a) that engages a plurality of intermediate gears (14b), which receive their rotational motion from a pinion (14c).

5. A process according to claim 4, wherein the pinion (14c) is driven in rotation by a motor (16), integral to the outer casing (10).

6. A process according to any of the preceding claims, wherein the prongs (12a) of the fork (12) each have a beveled end so as to create a guide which facilitates the insertion of the wire between said prongs (12a).

## Patentansprüche

1. Verfahren zum Verdrillen leitender Drähte zur Anwendung in einer elektrischen Maschine, aufweisend die folgenden Schritte:
a) Bereitstellen einer Vorrichtung (20), aufweisend:
- ein Gerät (1), welches umfasst:
- ein äußeres Gehäuse (10);
- eine Gabel (12), die drehbar von dem äußeren Gehäuse (10) gehalten ist und ein Paar Zinken (12a) aufweist, die in einer Richtung senkrecht zur Drehachse der Gabel (12) länglich sind, wobei einer oder mehrere leitende Drähte entlang einer Richtung parallel zur Drehachse der Gabel (12) derart zwischen die Zinken (12a) einsetzbar ist/sind, dass das Drehen der Gabel (12) ein Verdrillen der leitenden Drähte bewirkt; und
- einen Getriebemechanismus (14), der in dem äußeren Gehäuse untergebracht und zum Drehen der Gabel (12) ausgelegt ist;
- eine Stützstruktur (22), die in Bezug auf eine Bezugsebene befestigt ist; und
- einen Schlitten (24), der in Bezug auf die Stützstruktur (22) einstückig mit dem Gerät (1) verbunden in einer Richtung senkrecht zur Drehachse der Gabel (12) derart bewegbar ist, dass das Gerät (1) senkrecht bezüglich des zu verdrillenden Drahts bewegbar ist;
b) Bereitstellen eines Teils einer elektrischen Maschine (8) und zugehöriger Wicklungen (9), so dass die Wicklungen (9) von den Schlitzen des Teils der elektrischen Maschine (8) hervorstehen und noch nicht dauerhaft installiert sind;
c) Spannen einer Vielzahl von Wicklungen (9) bildenden leitenden Drähten in eine erste Richtung;
d) Bewegen des Geräts (1) derart, dass es quer zur ersten Richtung angeordnet ist;
e) Einführen der Vielzahl von leitenden Drähten in die Gabel (12) des Geräts (1);
f) ein- oder mehrmaliges Drehen der Gabel (12) um eine Achse parallel zur ersten Richtung, um den einen oder die mehreren leitenden Drähte miteinander zu verdrillen;
g) Abtrennen der Mehrzahl von leitenden Drähten; und
h) Einsetzen der Mehrzahl von leitenden Drähten in isolierende Ummantelungen.

2. Verfahren nach Anspruch 1, wobei dem Schritt b) der Schritt des Einbringens der Leiter in die Schlitze der elektrischen Maschine nach dem Wickeln um zwei parallele vertikale Bügel vorangeht.

3. Verfahren nach Anspruch 1 oder 2, wobei der Schlitten (24) entlang dreier räumlicher Dimensionen beweglich ist.

4. Verfahren nach einem der vorangehenden Ansprüche, wobei die Gabel (12) integral mit einem ersten Zahnrad (14a) drehbar ist, das in eine Vielzahl von Zwischenzahnrädern (14b) eingreift, die ihre Drehbewegung von einem Ritzel (14c) erhalten.

5. Verfahren nach Anspruch 4, wobei das Ritzel (14c) von einem Motor (16) drehend angetrieben wird, der einstückig mit dem äußeren Gehäuse (10) verbunden ist.

6. Verfahren nach einem der vorangehenden Ansprüche, wobei die Zinken (12a) der Gabel (12) jeweils ein abgeschrägtes Ende aufweisen, um eine Führung zu bewirken, die das Einsetzen des Drahtes zwischen den Zinken (12a) vereinfacht.

## Revendications

1. Procédé de torsion de fils conducteurs à appliquer dans une machine électrique, comprenant les étapes consistant à :
a) fournir un appareil (20) comprenant :
- un dispositif (1) qui comporte :
- un carter extérieur (10) ;
- une fourche (12) supportée en rotation par le carter extérieur (10) et comprenant une paire de griffes (12a) allongées dans une direction perpendiculaire à l'axe de rotation de la fourche (12), entre lesquelles griffes (12a) peuvent être insérés un ou plusieurs fils conducteurs le long d'une direction parallèle à l'axe de rotation de la fourche (12), de telle sorte que la rotation de ladite fourche (12) provoque une torsion du fil conducteur ; et
- un mécanisme de transmission (14) logé dans le carter extérieur et adapté pour faire tourner la fourche (12) ;
- une structure porteuse (22), fixe par rapport à un plan de référence ; et
- un coulisseau (24), mobile par rapport à la structure porteuse (22) en étant d'un seul tenant avec le dispositif (1) le long d'une direction perpendiculaire à l'axe de rotation de la fourche (12), de telle sorte que ledit dispositif (1) soit mobile perpendiculairement par rapport au fil à tordre ;
b) fournir une partie d'une machine électrique (8) et des enroulements relatifs (9), de telle sorte que lesdits enroulements (9) fassent saillie depuis les fentes de la partie de machine électrique (8) et ne soient pas encore en place de manière permanente ;
c) étirer une pluralité de fils conducteurs formant lesdits enroulements (9) vers une première direction ;
d) déplacer le dispositif (1) de telle manière qu'il soit disposé transversalement par rapport à ladite première direction ;
e) insérer la pluralité de fils conducteurs dans la fourche (12) du dispositif (1) ;
f) faire tourner la fourche (12) une ou plusieurs fois autour d'un axe parallèle à ladite première direction, de manière à tordre les un ou plusieurs fils conducteurs sur eux-mêmes ;
g) couper la pluralité de fils conducteurs ; et
h) insérer la pluralité de fils conducteurs dans des gaines isolantes.

2. Procédé selon la revendication 1, dans lequel l'étape b) est précédée de l'étape d'insertion des conducteurs dans les fentes de la machine électrique après enroulement autour de deux supports verticaux parallèles.

3. Procédé selon la revendication 1 ou 2, dans lequel le coulisseau (24) est mobile le long de trois dimensions spatiales.

4. Procédé selon l'une quelconque des revendications précédentes, dans lequel la fourche (12) est rotative d'un seul tenant avec un premier engrenage (14a) qui met en prise une pluralité d'engrenages intermédiaires (14b), qui reçoivent leur mouvement de rotation depuis un pignon (14c).

5. Procédé selon la revendication 4, dans lequel le pignon (14c) est entraîné en rotation par un moteur (16), d'un seul tenant avec le carter extérieur (10).

6. Procédé selon l'une quelconque des revendications précédentes, dans lequel les griffes (12a) de la fourche (12) présentent chacune une extrémité biseautée de manière à créer un guide qui facilite l'insertion du fil entre lesdites griffes (12a).
